# EUROPEAN PATENT APPLICATION

(11) **EP 4 456 623 A1**
(43) Date of publication of application: **30.10.2024**
(21) Application number: 22911978.9
(22) Date of filing: 22.12.2022
(51) Int. Cl.: H04W 60/04, H04W 8/02, H04W 84/06

(54) **METHOD AND APPARATUS FOR OPERATION OF USER EQUIPMENT IN WIRELESS COMMUNICATION SYSTEM**

(30) Priority: 22.12.2021 KR 20210185270
(71) Applicant: LG Electronics Inc., Yeongdeungpo-gu Seoul 07336 (KR)
(72) Inventor: KIM, Sunhee, Seoul 06772 (KR); YOUN, Myungjune, Seoul 06772 (KR)
(74) Representative: Plasseraud IP
(86) International application number: PCT/KR2022/021068
(87) International publication number: WO 2023/121345

(57) **Abstract**

The present disclosure relates to a method for operating a terminal in a wireless communication system, including: transmitting, by the terminal, a mobility registration request message to a first AMF based on a first cell; receiving, by the terminal, a registration accept message from the first AMF, wherein the registration accept message includes a TAI list and a service area list based on a registration area of the terminal; and based on the terminal being registered through a second cell based on at least one TAI that is determined by selecting at least one TAC among TACs that are broadcast based on the first cell, determining, by the terminal, whether or not to trigger a mobility registration request based on the TAI list and the service area list.

## Description

### Technical Field

The present disclosure relates to a wireless communication system, and more particularly, to a method for operating a terminal. Specifically, the present disclosure relates to a method for triggering mobility registration in a satellite network.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for triggering mobility registration in a satellite network of a wireless communication system.

The present disclosure relates to a method and device for triggering mobility registration based on a tracking area identity (TAI) list in a satellite network of a wireless communication system.

The present disclosure relates to a method and device for triggering mobility registration based on a service area list in a satellite network of a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

In addition, as an example of the present disclosure, an access and mobility management function (AMF) operating in a wireless communication system may include at least one transceiver, at least one processor, and at least one memory functionally coupled based on the at least one processor and storing instructions that instruct, when executed, the at least one processor to perform a specific operation, the specific operation may control the at least one transceiver to receive a mobility registration request message from a terminal based on a first cell and control the at least one transceiver to transmit a registration accept message to the terminal, the registration accept message may include a tracking area identity (TAI) list and a service area list based on a registration area of the terminal, and based on the terminal being registered through a second cell based on at least one TAI that is determined by selecting at least one tracking area code (TAC) among TACs that are broadcast based on the first cell, whether or not to trigger a mobility registration request may be determined based on the TAI list and the service area list.

In addition, as an example of the present disclosure, a method for operating an access and mobility management function (AMF) in a wireless communication system may include receiving a mobility registration request message from a terminal based on a first cell and transmitting a registration accept message to the terminal, the registration accept message may include a tracking area identity (TAI) list and a service area list based on a registration area of the terminal, and based on the terminal being registered through a second cell based on at least one TAI that is determined by selecting at least one tracking area code (TAC) among TACs that are broadcast based on the first cell, whether or not to trigger a mobility registration request may be determined based on the TAI list and the service area list.

In addition, as an example of the present disclosure, a terminal operating in a wireless communication system may include at least one transceiver, at least one processor, and at least one memory functionally coupled with the at least one processor and storing instructions that instruct, when executed, the at least one processor to perform a specific operation, the specific operation may be configured to: control the at least one transceiver to transmit a mobility registration request message to a first access and mobility management function (AMF), control the at least one transceiver to receive a registration accept message from the first AMF, wherein the registration accept message may include a tracking area identity (TAI) list and a service area list based on a registration area of the terminal, and determine whether or not to trigger a mobility registration request based on the TAI list and the service area list, based on the terminal being registered through a second cell based on at least one TAI that is determined by selecting at least one tracking area code (TAC) among TACs that are broadcast based on the first cell.

As an example of the present disclosure, a method for operating a terminal in a wireless communication system may include transmitting, by the terminal, a mobility registration request message to a first access and mobility management function (AMF) based on a first cell, receiving, by the terminal, a registration accept message from the first AMF, wherein the registration accept message may include a tracking area identity (TAI) list and a service area list based on a registration area of the terminal, and based on the terminal being registered through a second cell based on at least one TAI that is determined by selecting at least one tracking area code (TAC) among TACs that are broadcast based on the first cell, determining, by the terminal, whether or not to trigger a mobility registration request based on the TAI list and the service area list.

In addition, as an example of the present disclosure, in a device including at least one memory and at least one processor functionally coupled with the at least one memory, the at least one processor may control the device to transmit a mobility registration request message to a first access and mobility management function (AMF) based on a first cell, to receive a registration accept message from the first AMF, wherein the registration accept message may include a tracking area identity (TAI) list and a service area list based on a registration area of the terminal, and based on the terminal being registered through a second cell based on at least one TAI that is determined by selecting at least one tracking area code (TAC) among TACs that are broadcast based on the first cell, to determine whether or not to trigger a mobility registration request based on the TAI list and the service area list.

In addition, as an example of the present disclosure, a non-transitory computer-readable medium storing at least one instruction may include the at least one instruction that is executable by a processor, the at least one instruction may control a device to transmit a mobility registration request message to a first access and mobility management function (AMF) based on a first cell, to receive a registration accept message from the first AMF, wherein the registration accept message may include a tracking area identity (TAI) list and a service area list based on a registration area of the terminal, and based on the terminal being registered through a second cell by selecting at least one tracking area code (TAC) among TACs that are broadcast based on the first cell, to determine whether or not to trigger a mobility registration request based on the TAI list and the service area list.

In addition, the following may commonly apply.

As an example of the present disclosure, a TAI includes of a public land mobile network (PLMN) ID and a TAC, and whether or not the TAI is included in a TAI list may be determined based on the PLMN ID and the TAC.

In addition, as an example of the present disclosure, an access stratum (AS) layer of a terminal may deliver the broadcast TACs to a non-access stratum (NAS) layer of the terminal, and the NAS layer of the terminal may determine a TAI from the delivered TACs.

As an example of the present disclosure, in case a second cell is a non-satellite cell, when a terminal detects a TAI not included in a TAI list based on a first AMF, the terminal may trigger a mobility registration request.

In addition, as an example of the present disclosure, a second cell may be a fixed cell and correspond to one fixed TAI.

In addition, as an example of the present disclosure, in case a second cell is a satellite cell, the second cell may be a moving cell and correspond to at least one TAI.

In addition, as an example of the present disclosure, a terminal may trigger a mobility request in case at least one TAI are not included in a TAI list based on a first AMF.

In addition, as an example of the present disclosure, in case a terminal detects one TAI included in a TAI list based on a first AMF among at least one TAI, the terminal may determine whether or not to trigger a mobility request based on a service area list.

In addition, as an example of the present disclosure, in case one TAI included in a TAI list corresponds to an accept area based on a service area list, a mobility request may not be triggered, and in case one TAI included in the TAI list corresponds to a non-accept area based on the service area list, the mobility request may be triggered.

In addition, as an example of the present disclosure, in case a terminal detects a plurality of TAIs not included in a TAI list based on a first AMF based on at least one selected TAC, whether or not to trigger a mobility request may be determined based on the plurality of TAIs.

In addition, as an example of the present disclosure, in case all of a plurality of TAIs are not included in a TAI list based on a first AMF, a mobility request may be triggered.

In addition, as an example of the present disclosure, in case a plurality of TAIs are all included in a TAI list based on a first AMF, whether or not to trigger a mobility request may be determined based on a service area list.

In addition, as an example of the present disclosure, in case a plurality of TAIs correspond to all non-accept areas based on a service area list, a mobility request may be triggered.

In addition, as an example of the present disclosure, when a mobility registration request is triggered, a registration request message may be transmitted to a second AMF based on a second cell, and when a registration accept message is received from the second AMF, a TAI list may be updated.

### Advantageous Effects

The present disclosure may provide a method for triggering mobility registration in a satellite network of a wireless communication system.

The present disclosure may provide a method for triggering mobility registration based on a tracking area (TA) list in a satellite network of a wireless communication system.

The present disclosure may provide a mobility registration triggering method in a satellite cell including a plurality of TAs in a wireless communication system.

The present disclosure may provide a method for triggering mobility registration based on a service area list in a satellite network of a wireless communication system.

Technical objects to be achieved in the present disclosure are not limited to what is mentioned above, and other technical problems not mentioned herein may be considered by those skilled in the art, to which a technical configuration of the present disclosure is applied, from the following description of embodiments of the present disclosure.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a view showing a method of including a plurality of tracking areas (TAs) in a cell based on a moving cell applicable to the present disclosure.
FIG. 11 is a view showing a method for broadcasting a TA based on satellite movement applicable to the present disclosure.
FIG. 12 is a view showing a moving cell based on a satellite network applicable to the present disclosure.
FIG. 13 is a flowchart showing an operation of a terminal applicable to the present disclosure.
FIG. 14 is a view showing an operation of a terminal applicable to the present disclosure.
FIG. 15 is a view showing an operation of an AMF applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.
**3GPP LTE/EPS**
3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (SlAP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3
**3GPP NR/5GS**
3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3
**3GPPV2X**
3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

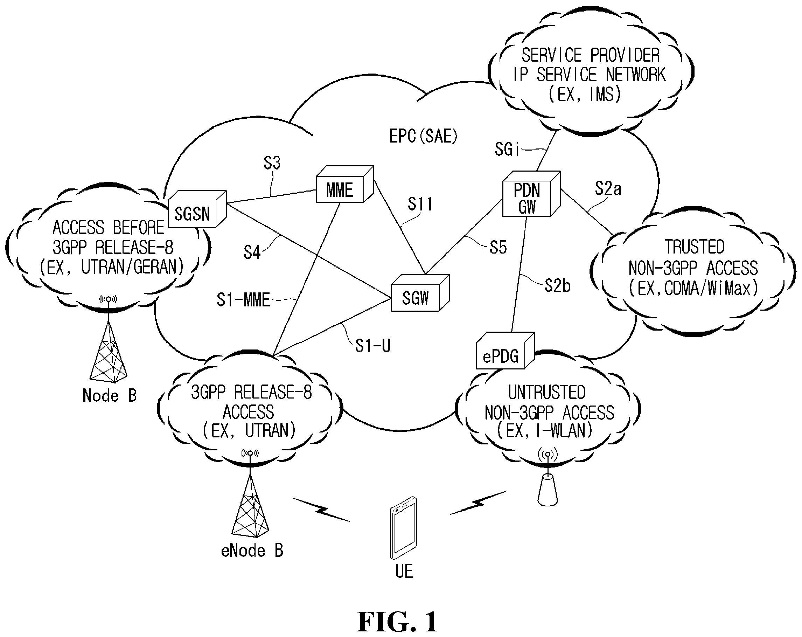

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

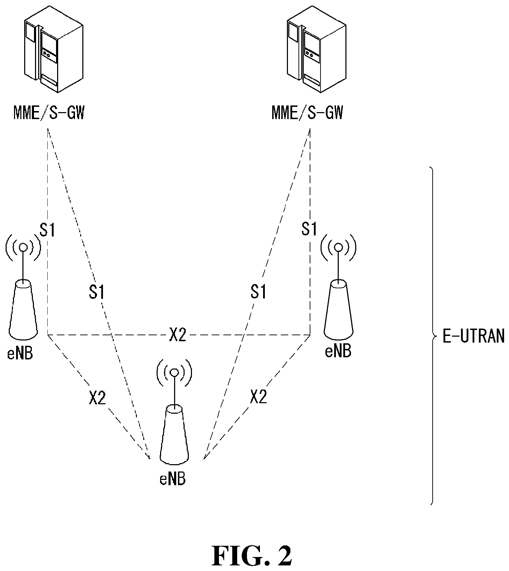

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

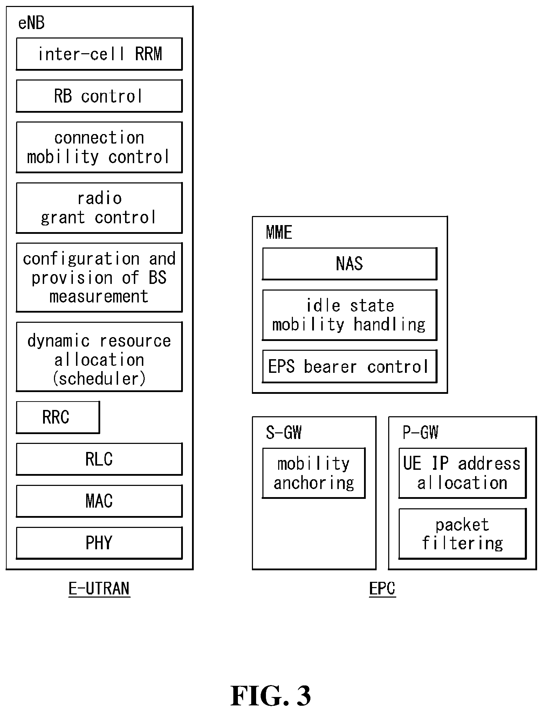

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

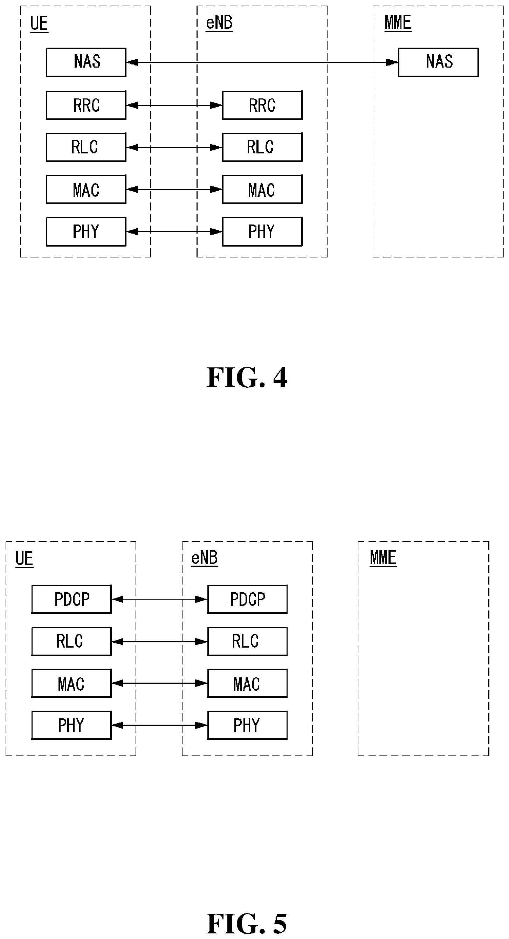

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

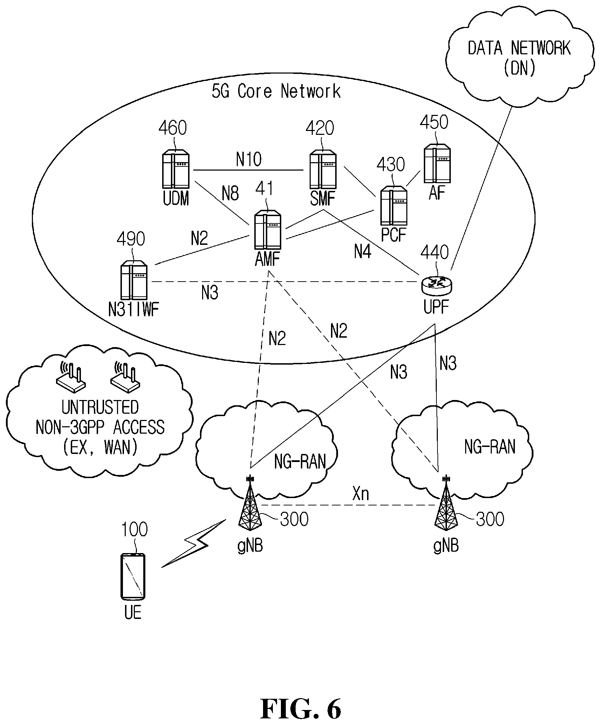

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

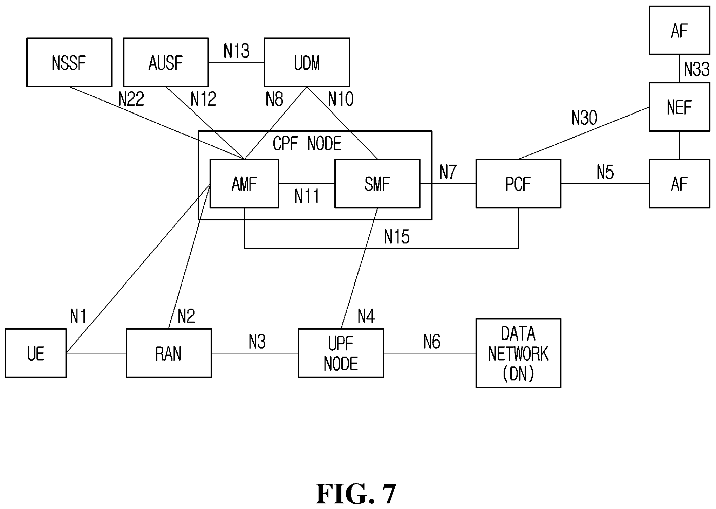

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

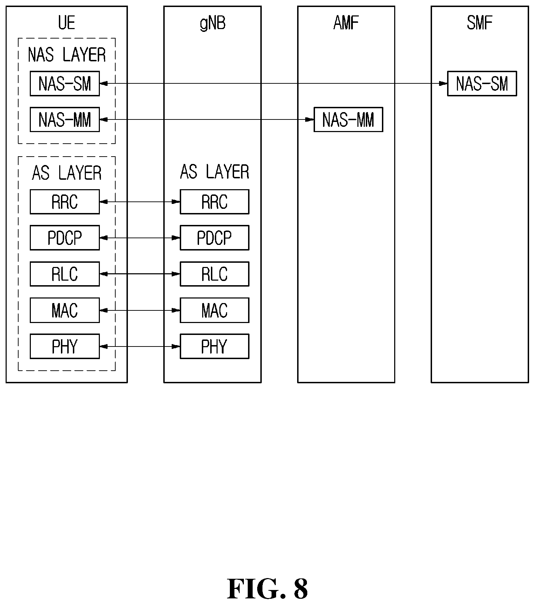

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

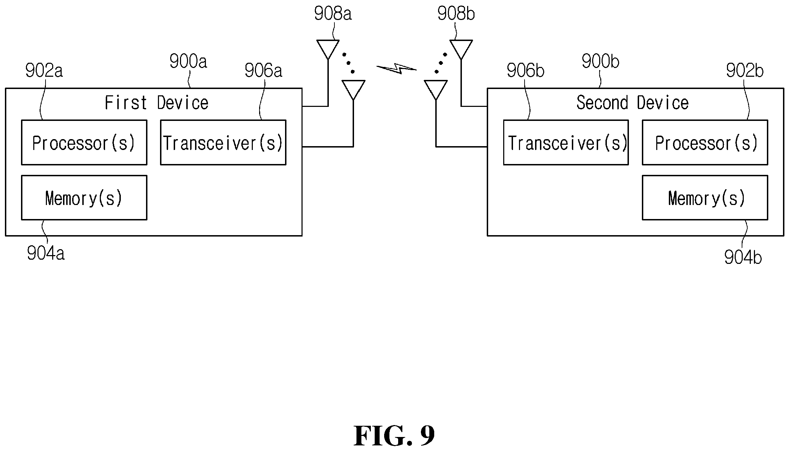

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, in case a terminal perform connection access in a terrestrial wave network, the terminal may perform the connection access through a fixed base station. An access coverage cell in a terrestrial wave network may be a cell that always has a fixed size. That is, a size of a cell in a fixed base station does not need to flexibly change and may have a fixed size all the time. Accordingly, in case a network manages connection access of a terminal, a tracking area (TA) unit may be fixed in a cell level. As an example, in an existing wireless system (e.g., LTE), a plurality of adjacent base stations may be bound into a single group, and one TA may be allocated. That is, a TA including each base station may be configured beforehand, and based on this, a TA unit may be fixed in a cell level.

In addition, as an example, a terminal may obtain service area list information indicating a service accept area based on a registration procedure or a terminal configuration update procedure. The service area list may include information on a list of an accept area where a service is accepted or on a non-accept list.

As an example, in case a service area restriction in a service area list is not delivered to a terminal or a service is indicated to be accepted in every TA in a PLMN of a registration area, the terminal may determine that the service is accepted in every TA in a registered PLMN or an equivalent PLMN in the registered area, and may remove a stored accept area list or a non-accept area list.

As another example, in case a terminal receives a service area list including service accept area information and a list stored in the terminal is a TAI list for an accept area, the terminal may remove the stored accept area TAI list and store an accept area TAI list based on the newly received service area list information. On the other hand, in case a terminal receives a service area list including service accept area information and a list stored in the terminal is a TAI list for a non-accept area, the terminal may remove the non-accept area TAI list and store an accept area TAI list based on the received service area list information.

As another example, in case a terminal receives a service area list including service non-accept area information and a list stored in the terminal is a TAI list for a non-accept area, the terminal may remove the stored non-accept area TAI list and store a non-accept area TAI list based on the newly received service area list information. On the other hand, in case a terminal receives a service area list including service non-accept area information and a list stored in the terminal is a TAI list for an accept area, the terminal may remove the accept area TAI list and store a non-accept area TAI list based on the received service area list information.

On the other hand, in case a terminal performs connection access based on a satellite network, because a satellite orbits the earth, the satellite may be different from a fixed base station. In addition, because the satellite is located at a high altitude, a size of a cell covered by the satellite may be larger than a terrestrial wave network. As an example, a size of a cell covered by a satellite may be large enough to cover a plurality of countries but may not be limited to a specific embodiment.

Considering what is described above, a satellite cell may include a plurality of TAs. That is, one satellite cell may broadcast a plurality of TAs included in coverage to a terminal. Herein, as an example, an access stratum (AS) layer of the terminal may notify the plurality of TAs received through broadcasting to a non-access stratum (NAS) of the terminal. As another example, the AS layer of the terminal may notify one TA selected from the plurality of TAs to the NAS layer of the terminal, which may not be limited to a specific embodiment.

As an example, a terminal may obtain a tracking area (TA) list by receiving an initial registration accept message or a mobility registration accept message. Specifically, in case a terminal performs initial access to a network, the terminal may deliver an initial registration request message to the network. Then, when the network accepts registration of the terminal, the network may transmit a registration accept message to the terminal. Herein, the registration accept message may include a new TAI list for the terminal. When the terminal receives that registration accept message and identify the new TAI list, the terminal may remove an existing TAI list and update to the new TAI list.

As another example, a terminal may transmit a mobility registration request message to a network. The terminal may transmit the mobility registration request message to the network based on a movement or preset period of the terminal. The network may check the mobility registration request message of the terminal and transmit a registration accept message to the terminal. Herein, the registration accept message may include a new TAI list for the terminal. When the terminal receives that registration accept message and identify the new TAI list, the terminal may remove an existing TAI list and update to the new TAI list.

Based on the above-described operation, a terminal may store a TAI list. Herein, in case the terminal detects a new TA not included in the TAI list, that is, in case the terminal moves to a cell, where the terminal has a new TAC, based on mobility and obtains a TAC and an AS layer of the terminal delivers a TAC not present in the stored TAI list to an NAS layer, the terminal may perform a mobility and periodic registration update procedure. Thus, the terminal may obtain an updated TAI list from a network. In addition, as an example, a TAI list of the terminal may be removed when the terminal fails in authentication and receives a rejection message from the network. As another example, when the terminal receives an authentication failure message based on an out-of-service area, the TAI list of the terminal may be removed. That is, a TAI list stored in the terminal may be newly updated or removed but is not limited to a specific form.

In addition, as an example, a mobility and periodic registration update procedure may be performed when a terminal connected to a core network performs a registration procedure. As an example, in case a terminal performs mobility and periodic registration update, the terminal may deliver a registration request message to an access and mobility management function (AMF) and receive a registration accept message. As a concrete example, when the terminal detects a movement to an area not included in a TA in a TAI list stored therein, the terminal may transmit the registration request message. In addition, as an example, when the terminal detects removal of a specific TA from the stored TAI list, the terminal may transmit the registration request message. As another example, when a periodic registration update timer expires in an idle state of the terminal, the terminal may transmit the registration request message. In addition, based on other reasons, the terminal may transmit the registration request message to perform mobility and periodic registration update but is not limited to a specific form.

As an example, a terminal may access a network through a satellite RAN. Herein, the satellite RAN may be different from a fixed network that exists on the earth. The satellite may be configured by orbiting the earth and perform data transmission and reception by a cell (or satellite cell) configured by the satellite RAN. As a concrete example, a cell of a terrestrial network may be a fixed cell. On the other hand, a cell by a satellite network may be a moving cell but is not limited thereto.

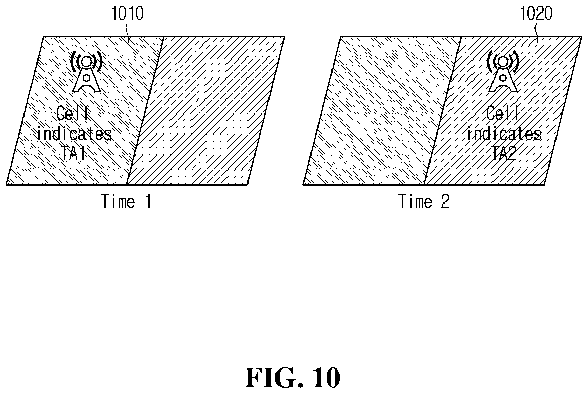

FIG. 10 is a view showing a method of including a plurality of tracking areas (TAs) in a cell based on a moving cell applicable to the present disclosure. Referring to FIG. 10, a cell may move along a movement of a satellite. As a concrete example, the cell may be located in a geographical location TA1 1010 at time T1, and the cell may indicate TA1 1010 to a TA of the cell based on a broadcast scheme. On the other hand, the cell may be located in TA2 1020 at time T2 based on the movement of the satellite, and the cell may indicate TA2 1020 to a TA of the cell based on a broadcast scheme. That is, based on a movement of a satellite, a TA of a cell may be different, and a moving cell may include a plurality of TAs. In consideration of what is described above, in a moving cell, it is necessary to differently set tracking area identity (TAI) selection, registration area concept, forbidden area concept, service area concept, and mobility registration trigger conditions, which will be described below.

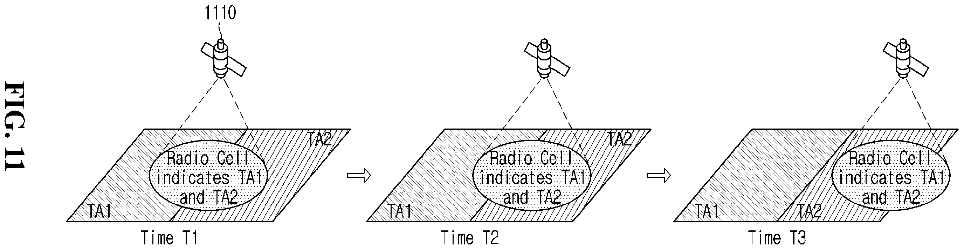

FIG. 11 is a view showing a method for broadcasting a TA based on satellite movement applicable to the present disclosure. Referring to FIG. 11, a TA indicated by a cell may be different based on a movement of a satellite 1110, which is the same as described above. Referring to FIG. 11, the satellite 1110 may move over time. As an example, at time T1, the satellite 1110 may exist in a location that configures a satellite cell between TA1 and TA2, including respective partial areas. Then, the satellite 1110 may move in a direction from TA1 to TA2. As an example, at time T2, the satellite 1110 may move to a location that configures a satellite cell including a partial area of TA1 and a partial area of TA2, and at time T3, the satellite 1110 may move to a location that configures a satellite cell in the TA2 area. Herein, at time T1, the satellite cell may indicate a TA of the satellite cell by broadcasting TA1 and TA2. In addition, at time T2, the satellite cell may also broadcast TA1 and TA2, and at time T3, the satellite cell may broadcast only TA2.

Accordingly, in case a terminal is located in TA1 at time T1, the terminal may obtain information on TA1 and TA2 as broadcast information and needs to determine which TA is to be selected. In addition, in case the terminal is located in TA2 at time T2, the terminal receives TA1 and TA2 from a RAN and thus needs to determine which TAI is to be selected. On the other hand, in case the terminal is located in TA2 at time T3, the terminal may select TA2 because a RAN broadcasts only TA2. That is, based on a movement of the satellite 1110, a moving cell may broadcast a plurality of TAs and broadcast a different TA along the movement of the satellite 1110. Accordingly, the terminal may need a method for selecting a TA based on the movement of the satellite, which will be described below.

### <Tracking Area>

A tracking area (TA) may be identified by a tracking area identity (TAI). A TAI may consist of a public land mobile network (PLMN) ID and a tracking area code (TAC). Specifically, the TAI may consist of a mobile country code (MCC), a mobile network code (MNC), and TAC. Herein, the MCC may be a code for identifying a country in which a PLMN is located, and the MNC may be a code for identifying the PLMN in the country. In addition, the TAC has a code with a fixed length and may be a code for identifying a tracking area in the PLMN. Accordingly, the tracking area may be identified in the PLMN based on the TAI consisting of the PLMN ID and the TAC. As an example, information elements of a TAI may be as shown in Table 1 below but may not be limited thereto.

**[Table 1]**

| | | | | | | | | |
|---|---|---|---|---|---|---|---|---|
| 8 | 7 | 6 | 5 | 4 | 3 | 2 | 1 | |
| 5GS tracking area identity IEI | | | | | | | | octet 1 |
| MCC digit 2 | | | | MCC digit 1 | | | | octet 2 |
| MNC digit 3 | | | | MCC digit 3 | | | | octet 3 |
| MNC digit 2 | | | | MNC digit 1 | | | | octet 4 |
| TAC | | | | | | | | octet 5 |
| TAC (continued) | | | | | | | | octet 6 |
| TAC (continued) | | | | | | | | octet 7 |

In addition, a TAI list may consist of a PLMN ID and at least one TAC. As an example, as shown in Table 2 below, a TAI list may include at least one "partial tracking area identity list", and the "partial tracking area identity list" may be as shown in Table 3 to Table 5 below but may not be limited thereto. Herein, referring to Table 3 to Table 5 below, a TAI list may be configured by a combination of a PLMN ID and at least one TAC and be configured in a different form based on a "partial tracking area identity list" type but may not be limited to a specific form.

**[Table 2]**

| | | | | | | | | |
|---|---|---|---|---|---|---|---|---|
| 8 | 7 | 6 | 5 | 4 | 3 | 2 | 1 | |
| 5GS tracking area identity list IEI | | | | | | | | octet 1 |
| Length of 5GS tracking area identity list contents | | | | | | | | octet 2 |
| Partial tracking area identity list 1 | | | | | | | | octet 3 |
| | | | | | | | | octet i |
| Partial tracking area identity list 2 | | | | | | | | octet i+1* |
| | | | | | | | | octet l* |
| ... | | | | | | | | octet l+1* |
| | | | | | | | | octet m* |
| Partial tracking area identity list p | | | | | | | | octet m+1* |
| | | | | | | | | octet n* |

**[Table 3]**

| | | | | | | | | |
|---|---|---|---|---|---|---|---|---|
| 8 | 7 | 6 | 5 | 4 | 3 | 2 | 1 | |
| 0 Spare | Type of list | | Number of elements | | | | | octet 1 |
| MCC digit 2 | | | | MCC digit 1 | | | | octet 2 |
| MNC digit 3 | | | | MCC digit 3 | | | | octet 3 |
| MNC digit 2 | | | | MNC digit 1 | | | | octet 4 |
| TAC 1 | | | | | | | | octet 5 |
| TAC 1 (continued) | | | | | | | | octet 6 |
| TAC 1 (continued) | | | | | | | | octet 7 |
| ... | | | | | | | | ... |
| ... | | | | | | | | ... |
| TAC k | | | | | | | | octet 3k+2* |
| TAC k (continued) | | | | | | | | octet 3k+3* |
| TAC k (continued) | | | | | | | | octet 3k+4* |

**[Table 4]**

| | | | | | | | | |
|---|---|---|---|---|---|---|---|---|
| 8 | 7 | 6 | 5 | 4 | 3 | 2 | 1 | |
| 0 Spare | Type of list | | Number of elements | | | | | octet 1 |
| MCC digit 2 | | | | MCC digit 1 | | | | octet 2 |
| MNC digit 3 | | | | MCC digit 3 | | | | octet 3 |
| MNC digit 2 | | | | MNC digit 1 | | | | octet 4 |
| TAC 1 | | | | | | | | octet 5 |
| TAC 1 (continued) | | | | | | | | octet 6 |
| TAC 1 (continued) | | | | | | | | octet 7 |

**[Table 5]**

| | | | | | | | | |
|---|---|---|---|---|---|---|---|---|
| 8 | 7 | 6 | 5 | 4 | 3 | 2 | 1 | |
| 0 Spare | Type of list | | Number of elements | | | | | octet 1 |
| MCC digit 2 | | | | MCC digit 1 | | | | octet 2 |
| MNC digit 3 | | | | MCC digit 3 | | | | octet 3 |
| MNC digit 2 | | | | MNC digit 1 | | | | octet 4 |
| TAC 1 | | | | | | | | octet 5 |
| TAC 1 (continued) | | | | | | | | octet 6 |
| TAC 1 (continued) | | | | | | | | octet 7 |
| MCC digit 2 | | | | MCC digit 1 | | | | octet 8* |
| MNC digit 3 | | | | MCC digit 3 | | | | octet 9* |
| MNC digit 2 | | | | MNC digit 1 | | | | octet 10* |
| TAC 2 | | | | | | | | octet 11* |
| TAC 2 (continued) | | | | | | | | octet 12* |
| TAC 2 (continued) | | | | | | | | octet 13* |
| ... | | | | | | | | octet 6k-4* |
| ... | | | | | | | | |
| MCC digit 2 | | | | MCC digit 1 | | | | |
| MNC digit 3 | | | | MCC digit 3 | | | | octet 6k-3* |
| MNC digit 2 | | | | MNC digit 1 | | | | octet 6k-2* |
| TAC k | | | | | | | | octet 6k-1* |
| TAC k (continued) | | | | | | | | octet 6k* |
| TAC k (continued) | | | | | | | | octet 6k+1* |

Hereinafter, based on what is described above, whether or not a TAI determined by a terminal based on a TAC is included in a TAI list will be mainly described, and detailed matters will be described below.

### <Mobility restriction>

Mobility restriction may mean restricting mobility processing or service access of a user equipment (UE). A mobility restriction function may be provided in a UE, a radio access network, and a core network, and details may be as shown in Table 6 below. As an example, a UE and a network may not be applied when accessing a network for an emergency service, but is not limited thereto.

In addition, in a RRC inactive state, service area restriction and forbidden area handling for a CM-idle state and a CM-connected state may be performed by a terminal based on information received from a core network. In addition, in a RRC-connected state, a mobility restriction for the CM-connected state may be performed by a radio access network and the core network. As an example, in the CM-connected state, the core network may provide a mobility restriction in a mobility restriction list to the radio access network. As an example, the mobility restriction may consist of a RAT restriction, a forbidden area, a service area restriction, a core network type restriction, and closed access group information as follows, each of which may be as described below.

### RAT restriction

3GPP radio access technologies are defined, and a UE may not be permitted to access a PLMN. In the PLMN, a subscription-based UE with a restricted RAT may not be permitted to access the PLMN. In the CM-connected state, when a radio access network determines a target RAT and a target PLMN during a handover procedure, the radio access network may consider a RAT restriction for each PLMN. In addition, a RAT restriction may be implemented in a network and not be provided to a UE.

### Forbidden area

In a forbidden area, a subscription-based UE cannot start communication with a network for a corresponding PLMN. In terms of cell selection, RAT selection, and PLMN selection, a UE operation may be different according to a network response that notifies a forbidden area to the UE. As an example, a forbidden area may be applied to 3GPP access or non-3GPP access. In addition, support for a forbidden area with NR satellite access may be configured and is not limited to a specific form.

### Service area restriction

An area where a UE may initiate or may not initiate communication with a network may be defined as follows.

### - Allowed area:

In an allowed area, a UE may initiate communication with a network as allowed by subscription.

### - Non-allowed area

A non-allowed area may be a restricted service area according to subscription of a UE. A UE and a network are not allowed to initiate a service request or a connection request for user plane data, control plane data, exception data report or SM signal (excluding report of PS data off-state change) in order to obtain a UE service not associated with mobility

The UE may not use entry into a non-allowed as a criterion for cell reselection, a trigger for PLMN selection or domain selection for UE originating sessions or calls. A RRC procedure while the UE is in CM-connected with a RRC inactive state may not be changed compared to when the UE is in an allowed area. In addition, a RM procedure may not be changed compared to when the UE is in an allowed area. In addition, the UE in a non-allowed area may respond to core network paging or NAS notification message obtained from a non-3GPP access core based on a service request and RAN paging. In addition, the UE in a non-allowed area may initial MA PDU session configuration or activation through non-3GPP access other than wireline access, but a user plane resource of 3GPP access for MA-PUD may not be configured or activated. In addition, details about mobility restriction may be described as follows.

**[Table 6]**

| | | | | |
|---|---|---|---|---|
| | | | 5.3.4.1 Mobility Restrictions | |
| | | | | 5.3.4.1.1 General |
| Mobility Restrictions restrict mobility handling or service access of a UE. The Mobility Restriction functionality is provided by the UE (only for mobility restriction categories provided to the UE), the radio access network and the core network. | | | | |
| Unless otherwise stated, Mobility Restrictions only apply to 3GPP access and wireline access, they do not apply to other non-3GPP accesses. | | | | |
| The UE and the network shall override Mobility restriction as specified in clause 5.16.4.3 when accessing the network for Emergency Services. For MPS and MCX, service area restriction does not apply, as specified in TS 24.501 [47]. | | | | |
| Service Area restrictions and handling of Forbidden Areas for CM-IDLE state and, for CM-CONNECTED state when in RRC Inactive state are executed by the UE based on information received from the core network. Mobility Restrictions for CM-CONNECTED state when in RRC-Connected state are executed by the radio access network and the core network. | | | | |
| In CM-CONNECTED state, the core network provides Mobility Restrictions to the radio access network within Mobility Restriction List. | | | | |
| Mobility Restrictions consists of RAT restriction, Forbidden Area, Service Area Restrictions, Core Network type restriction and Closed Access Group information as follows: | | | | |
| | - RAT restriction: | | | |
| | | Defines the 3GPP Radio Access Technology(ies), a UE is not allowed to access in a PLMN. In a restricted RAT a UE based on subscription is not permitted access to the network for this PLMN. For CM-CONNECTED state, when radio access network determines target RAT and target PLMN during Handover procedure, it should take per PLMN RAT restriction into consideration. The RAT restriction is enforced in the network, and not provided to the UE. | | |
| | - Forbidden Area: | | | |
| | | In a Forbidden Area, the UE, based on subscription, is not permitted to initiate any communication with the network for this PLMN. The UE behaviour in terms of cell selection, RAT selection and PLMN selection depends on the network response that informs the UE of Forbidden Area. A Forbidden Area applies either to 3GPP access or to non-3GPP access. | | |
| | | Further description on Forbidden Area when using wireline access is available in TS 23.316 [84]. | | |
| | Support for Forbidden Area with NR satellite access is described in clause 5.4.1 1.Y.NOTE 1: If the N3GPP TAI (see clause 5.3.2.3) is forbidden in a PLMN, non-3GPP Access is forbidden altogether in this PLMN. | | | |
| | NOTE 2: The UE reactions to specific network responses are described in TS 24.501 [47]. | | | |
| | - Service Area Restriction: | | | |
| | | Defines areas in which the UE may or may not initiate communication with the network as follows: | | |
| | | - Allowed Area: | | |
| | | | In an Allowed Area, the UE is permitted to initiate communication with the network as allowed by the subscription. | |
| | | - Non-Allowed Area: | | |
| | | | In a Non-Allowed Area a UE is service area restricted based on subscription. The UE and the network are not allowed to initiate Service Request, or any connection | |
| | | | | requests for user plane data, control plane data, exception data reporting, or SM signalling (except for PS Data Off status change reporting) to obtain user services that are not related to mobility. |
| | | | | The UE shall not use the entering of a Non-Allowed Area as a criterion for Cell Reselection, a trigger for PLMN Selection or Domain selection for UE originating sessions or calls. The RRC procedures while the UE is in CM-CONNECTED with RRC Inactive state are unchanged compared to when the UE is in an Allowed Area. The RM procedures are unchanged compared to when the UE is in an Allowed Area. The UE in a Non-Allowed Area shall respond to core network paging or NAS Notification message from non-3GPP access with Service Request and RAN paging. The UE in a Non-Allowed Area may initiate MA PDU Session establishment or activation over a non-3GPP access other than wireline access, but the User Plane resources on the 3GPP access for the MA-PDL shall not be established or activated. |
| | | | | The handling of Non-Allowed Area when using wireline access is described in TS 23.316 [84]. |
| | | NOTE 3: When the services are restricted in 5GS due to Service Area Restriction, then it is assumed that the services will be also restricted in all RATs/Systems at the same location(s) using appropriate mechanisms available in the other RATs/Systems. | | |
| | | NOTE 4: Delivery of SOR transparent container, UE policy container, UE parameters update transparent container as defined in TS 24.501 [47], is part of the mobility related service and is allowed in an area with service restriction. | | |
| | | NOTE 5: For a UE in CM-CONNECTED state then neither control plane data transmission nor, if user plane resources are already established, user plane data transmission are restricted by a non-allowed area. | | |
| | | - Core Network type restriction: | | |
| | | | Defines whether UE is allowed to connect to 5GC only, EPC only, both 5GC and EPC for this PLMN. The Core Network type restriction when received applies in the PLMN either to both 3GPP and non-3GPP Access Types or to non-3GPP Access Type only. | |
| | | NOTE 6: The Core Network type restriction can be used e.g. in network deployments where the E-UTRAN connects to both EPC and 5GC as described in clause 5.17. When the Core Network type restriction applies to non-3GPP Access Type, the UE is restricted from using any connectivity to an N3IWF. | | |
| | | - Closed Access Group information: | | |
| | | | | As defined in clause 5.30.3. |
| For a given UE, the core network determines the Mobility Restrictions based on UE subscription information, UE location and/or local policy (e.g. if the HPLMN has not deployed 5GC, HPLMN ID of the UE and the operator's policy are used in the VPLMN for determining the Core Network type restriction). The Mobility Restriction may change due to e.g. UE's subscription, 1 ocation change and local policy. Optionally the Service Area Restrictions or the Non-Allowed Area may in addition be fine-tuned by the PCF e.g. based on UE location, PEI and network policies. Service Area Restrictions may be updated during a Registration procedure or UE Configuration Update procedure. | | | | |
| | | NOTE 7: The subscription management ensure that for MPS service subscriber the Mobility Restrictions is not included. | | |
| If the network sends Service Area Restrictions to the UE, the network sends only either an Allowed Area, or a Non-Allowed Area, but not both at the same time, to the UE. If the UE has received an Allowed Area from the network, any TA not part of the Allowed Area is considered by the UE as non-allowed. If the UE has received a Non-Allowed Area from the network, any | | | | |
| TA not part of the Non-Allowed Area is considered by the UE as allowed. If the UE has not received any Service Area Restrictions, any TA in the PLMN is considered as allowed. | | | | |
| If the UE has overlapping areas between Forbidden Areas, Service Area Restrictions, or any co mbination of them, the UE shall proceed in the following precedence order: | | | | |
| | | | - The evaluation of Forbidden Areas shall take precedence over the evaluation of Service Area Restrictions. | |
| The UDM shall provide to the AMF the information defined in TS 23.008 [119] about the subscriber's NR or E-UTRA access restriction set by the operator determined e.g. by subscription scenario and roaming scenario: | | | | |
| | | | - For NR: | |
| | | | | - NR not allowed as primary access. |
| | | | | - NR not allowed as secondary access. |
| | | | | - NR in unlicensed bands not allowed as primary access. |
| | | | | - NR in unlicensed bands not allowed as secondary access. |
| | | | - For E-UTRA: | |
| | | | | - E-UTRA not allowed as primary access. |
| | | | | - E-UTRA not allowed as secondary access. |
| | | | | - E-UTRA in unlicensed bands not allowed as secondary access. |
| | | | | - NB-IoT not allowed as primary access. |
| | | | | - LTE-M not allowed as primary access. |
| In order to enforce all primary access restrictions, the related access has to be deployed in different Tracking Area Codes and the subscriber shall not be allowed to access the network in TAs using the particular access. | | | | |
| With all secondary access restrictions, the subscriber shall not be allowed to use this access as secondary access. | | | | |

### <Management of service area restrictions>

Service area restrictions may each include one or more (e.g., a maximum of 16) tracking areas. In addition, as an example, service area restrictions may be set as unlimited (that is, including all tracking areas of a PLMN). As an example, subscription data of a UE in unified data management (UDM) may include a service area restriction that may include an allowed or non-allowed area specified using an explicit tracking area ID and/or other geographical information (e.g., longitude/latitude, zip code, etc.). Herein, the geographical information used to specify the allowed or non-allowed area is managed only in a network, and the network may service area restriction information to a TA list before delivering the information to a PCF, an NG-RAN, and the UE. In addition, in case an AMF allocates a restricted allowed area to the UE, the AMF may provide the UE with service area restrictions consisting of allowed areas or non-allowed areas. As an example, an allowed area included in a service area restriction may be configured beforehand and/or may be dynamically allocated by the AMF. In addition, allowed areas may be configured as unlimited but is not limited thereto, and details may be as shown in Table 7 below.

**[Table 7]**

| | | |
|---|---|---|
| | | 5.3.4.1.2 Management of Service Area Restrictions |
| This clause describes Service Area Restrictions for 3GPP access. For Service Area Restrictions when using wireline access, see TS 23.316 [84]. | | |
| A Service Area Restriction may contain one or more (e.g. up to 16) entire Tracking Areas each or the Service Area Restriction may be set as unlimited (i.e. contain all Tracking Areas of the PLMN). The UE's subscription data in the UDM includes a Service Area Restriction which may contain either Allowed or Non-Allowed Areas-specified by using explicit Tracking Area identities and/or other geographical information (e.g. longitude/latitude, zip code, etc). The geographical information used to specify Allowed or Non-Allowed Area is only managed in the network, and the network will map it to a list of TAs before sending Service Area Restriction information to the PCF, NG-RAN and UE. | | |
| When the AMF assigns a limited allowed area to the UE, the AMF shall provide the UE with Service Area Restrictions which consist of either Allowed Areas or Non-Allowed Areas. The Allowed Areas included in the Service Area Restrictions can be pre-configured and/or dynamically assigned by the AMF. | | |
| The Allowed Area may alternatively be configured as unlimited i.e. it may contain all Tracking Areas of the PLMN. The Registration Area of a UE in the Non-Allowed Area should consist of a set of TAs which belongs to a Non-Allowed Area of the UE. The Registration Area of a UE in the Allowed Area should consist of a set of TAs which belongs to an Allowed Area of the UE. The AMF provides the Service Area Restriction in the form of TA(s), which may be a subset of full list stored in UE's subscription data or provided by the PCF, to the UE during the Registration procedure. | | |
| | NOTE: As the finest granularity for Service Area Restrictions are at TA level, subscriptions with limited geographical extent, like subscriptions for Fixed Wireless Access, will be allocated one or a few TAs and will consequently be allowed to access services in a larger area than in e.g. a FWA system. | |
| The limited allowed area may also be limited by the AMF by a maximum allowed number of Tracking Areas, even though this limitation is not sent to the UE. If maximum allowed number of Tracking Areas is used in combination with Allowed Area, the maximum allowed number of Tracking Areas indicates (to the AMF) the maximum number of TAs allowed in limited allowed area inside the Allowed Area. If maximum allowed number of Tracking Areas is used in combination with Non-Allowed Area, the maximum allowed number of Tracking Areas indicates (to the AMF) the maximum number of TAs allowed in limited allowed area outside of the Non-Allowed Area. | | |
| The UDM stores the Service Area Restrictions of a UE as part of the UE's subscription data. The PCF in the serving network may (e.g. due to varying conditions such as UE's location, application in use, time and date) further adjust Service Area Restrictions of a UE, either by expanding an Allowed Area or by reducing a Non-Allowed Area or by increasing the maximum allowed number of Tracking Areas. If NWDAF is deployed, the PCF may use analytics (i.e. statistics or predictions) on UE mobility from NWDAF (see TS 23.288 [86]) to adjust Service Area Restrictions. The UDM and the PCF may update the Service Area Restrictions of a UE at any time. For the UE in CM-CONNECTED state the AMF updates the UE and RAN i mmediately. For UE in CM-IDLE state the AMF may page the UE immediately or sto re the updated service area restriction and update the UE upon next signalling interacti on with the UE, as defined in TS 24.501 [47]. | | |
| During registration, if the Service Area Restrictions of the UE is not present in the AMF, the AMF fetches from the UDM the Service Area Restrictions of the UE that may be further adjusted by the PCF. The serving AMF shall enforce the Service Area Restrictions of a UE. A limited allowed area given by a maximum allowed number of Tracking Areas, may be dynamically assigned by the AMF adding any not yet visited (by the UE) Tracking Areas to the limited allowed area until the maximum allowed number of Tracking Areas is reached (i.e. the AMF adds new TAs to the limited allowed area until the number of TAs is equal to the maximum allowed number of Tracking Areas). The AMF deletes the list of TAs that have been used up under the maximum allowed number of Tracking Areas quota at every Initial Registration. | | |
| For a UE in CM-CONNECTED state the AMF shall indicate the Service Area Restrictions of | | |
| this UE to the RAN, using a Mobility Restriction List. | | |
| The UE shall store the received Service Area Restrictions and, if there is previously stored Service Area Restrictions, replace them with the newly received information. If the Service Area Restrictions include a limited allowed area, the Service Area Restrictions are applicable for the Tracking areas indicated in Service Area Restrictions. If the Service Area Restrictions included an unlimited allowed area, the received Service Area Restrictions are applicable for the registered PLMN and its equivalent PLMN(s) that are available in the Registration Area. The RAN uses the Service Area Restrictions for target cell selection in Xn and N2 based handover. | | |
| Upon change of serving AMF due to mobility, the old AMF may provide the new AMF with the Service Area Restrictions of the UE that may be further adjusted by the PCF. | | |
| The network may perform paging for a UE to update Service Area Restrictions with Generic UE Configuration Update procedure (see clause 4.2.4 of TS 23.502 [3]). | | |
| In the case of roaming, the Service Area Restrictions are transferred from the UDM via the serving AMF to the serving PCF in the visited network. The serving PCF in the visited network may further adjust the Service Area Restrictions. | | |
| Support for Service Area Restrictions with NR satellite access is described in clause 5.4.11.Y. | | |

In addition, as an example, mobility registration update support considering a moving cell based on a satellite network may be considered. As an example, a moving cell based on a satellite network may indicate one or more tracking area codes (TACs) for each PLMN. Herein, an TAI may be configured as a combination of a TAC and a PLMN. Accordingly, a UE may configure a TAI through an indicated TAC and a PLMN.

A UE registered to a PLMN may not perform a mobility registration update procedure in at least one TAC that is supported in a PLMN that is registered as a registration area of the UE. When accessing a cell of an area not included in a TAC supported in a registration PLMN that is registered as a registration area of the UE, the UE may perform the mobility registration update procedure. That is, when browsing a cell in a TAC not included in TACs of a registration area, the UE may perform the mobility registration update procedure. Herein, as an example, a TA may be a value based on a fixed location, and because a cell moves according to a movement of a satellite, a TAC value, which is broadcast as system information of the cell in a RAN, may be changed. As an example, the RAN may broadcast one or more TACs for a PLMN and add or remove a TAC value according to the movement of the cell. In addition, as an example, based on the broadcast TACs, the RAN may provide one TAI corresponding to one TAC or all TAIs corresponding to all the broadcast TACs to an AMF based on user location information (ULI). As an example, the ULI may be delivered from the RAN to the AMF through a NGAP message but is not limited to a specific embodiment. In addition, as an example, in case the RAN perceives a TAI based on a geographical location of a UE, the RAN may deliver TAI information to the AMF. Herein, the AMF may select an TAI by considering a registration area of the UE.

In addition, as an example, additional functions based on a mobility forbidden area and a service area restriction may exist in satellite access. An AMF may receive one TAI or all TAIs from a RAN. In case the AMF receives all the TAIs from the RAN, the AMF may transmit a registration reject message when all the TAIs received from the RAN are forbidden based on subscription data. Accordingly, UE communication may be forbidden. On the other hand, in case the AMF receives all the TAIs from the RAN, the AMF may transmit a registration accept message when any one of the TAIs is not forbidden. That is, the UE may determine that communication is not forbidden, when one of the TAIs is not forbidden.

In addition, as an example, in case the AMF receives one broadcast TAI from the RAN, the AMF may transmit a registration reject message when a corresponding TA is forbidden based on subscription data. Thus, UE communication may be forbidden.

In addition, the AMF may indicate a service registration area to a UE based on an allowed area and a non-allowed area. Herein, in case the AMF receives all the TAIs from the RAN, the UE and the AMF may determine as being located in a non-allowed area when all the TAIs are not allowed. On the other hand, the UE and the AMF may determine as being located in an allowed area when one of the TAIs is allowed.

In addition, as an example, when at least one TAI is included in a registration area of the UE, the UE may not trigger mobility registration update. That is, the UE may not perform the mobility registration update when any one of TAIs corresponding to a broadcast TAC is included in the registration area.

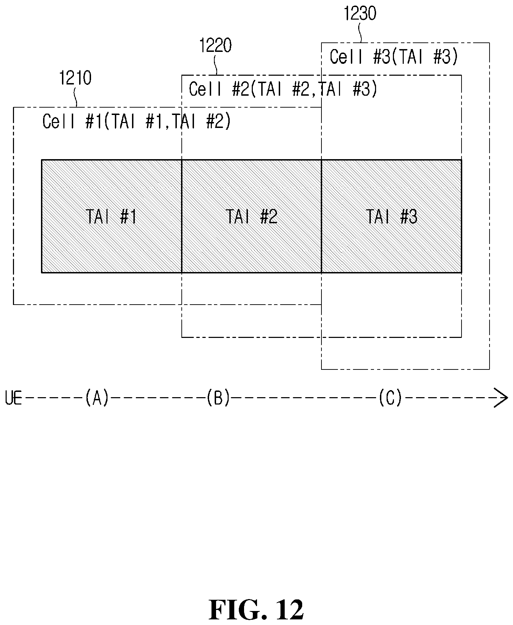

FIG. 12 is a view showing a moving cell based on a satellite network applicable to the present disclosure.

Referring to FIG. 12, a moving cell of a satellite network may operate based on the configuration of FIG. 12. As an example, the tracking area identity (TAI) #1, TAI#2 and TAI#3 may be set based on a geographical location. Herein, a UE may move from a location A to a location B and then to a location C, but this is only for convenience of explanation, and the UE is not limited thereto. As an example, each cell of FIG. 12 may be a moving cell as a satellite cell. Herein, a cell#1 1210 may be set to the areas of TAI#1 and TAI#2 and broadcast TAC#1 and TAC#2 corresponding to TAI#1 and TAI#2. In addition, a cell#2 1220 may be set to the areas of TAI#2 and TAI#3 and broadcast TAC#2 and TAC#3 corresponding to TAI#2 and TAI#3. In addition, a cell#3 1230 may be set to the area of TAI#3 and broadcast TAC#3 corresponding to TAI#3.

In addition, AMF#1 may include TAI#1 and TAI#2 based on subscription information of the UE, and AMF#2 may include TAI#3 based on the subscription information of the UE. Herein, it is possible to consider a case in which the UE is turned on (has its power on) in the cell#1 1210 and then moves. As an example, the UE may camp on the cell#1 1210, and a RAN may deliver TAI#1 and TAI#2 as TA information of the cell#1 1210 to the UE through a system information block (SIB). In addition, as an example, AMF#1 may request a location of the UE to the RAN. Herein, the RAN may notify all the TAIs (TAI#1 and TAI#2) to AMF#1 based on user location information (ULI).

In addition, AMF#1 may a registration accept message to the UE. Herein, the registration accept message may include a TAI list and a service area list. Based on the information received from the RAN, AMF#1 may provide the UE with TAI list information and the service area list based on an allowed area, which is as shown in Table 8 below.

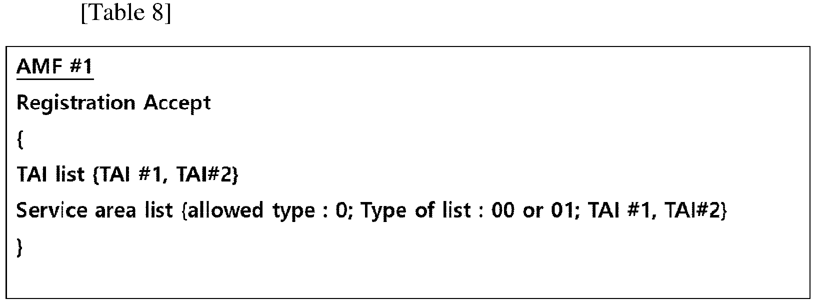

Next, the UE may move to the location B and select and camp on the cell#2 1220. Herein, the UE may receive TAI#2 and TAI#3 as TA information of the cell#2 1220 that is broadcast from the RAN. When the UE receives TAI#2 and TAI#3 as TA information of the cell#2 1220, the UE may not trigger mobility registration because of TAI#2 since the TAI list of the UE has TAI#1 and TAI#2.

Next, the UE may move to the location C and select and camp on the cell#3 1230. Herein, the UE may receive TAI#3 as TA information of the cell#3 1230 that is broadcast from the RAN. When the UE receives TAI#3 as TA information of the cell#3 1230, the UE may trigger mobility registration because TAI#3 is not present in the TAI list of the UE. Accordingly, the UE may deliver a registration request message to AMF#2, which is as shown in Table 9 below. Next, the UE may obtain and store a TAI list including TAI#3 from AMF#2 through a registration accept message.

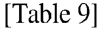

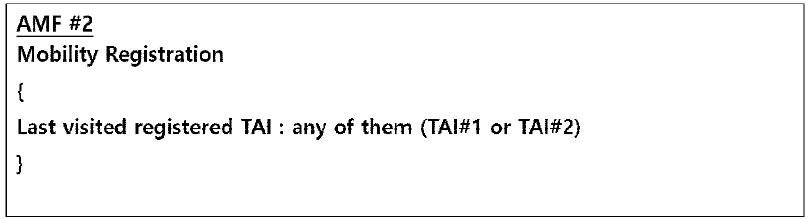

Next, the UE may move to the location B again and select and camp on the cell#2 1220. Herein, the UE may receive TAI#2 and TAI#3 as TA information of the cell#2 1220 that is broadcast from the RAN. Herein, the UE may not trigger mobility registration because TAI#3 is present in the TAI list. Herein, as an example, AMF#2 may provide the UE with a service accept list including TAI#2 alone but not TAI#3 based on subscription information and the TAI list including TAI#2 and TAI#3 based on a registration area through a registration accept message, which is as shown in Table 10 below. Herein, the UE may store TAI#2 and TAI#3 included in the TAI list in the TAI list.

Herein, as an example, in case the AMF indicates a service area restriction, the AMF may notify an allowed area or a non-allowed area, and the AMF and the UE may determine an area as an allowed area when any one of broadcast TAIs is allowed, which is the same as described above. In the above-described situation, the UE does not trigger mobility registration based on a TAI list but store TAI#2 and TAI#3 in the TAI list.

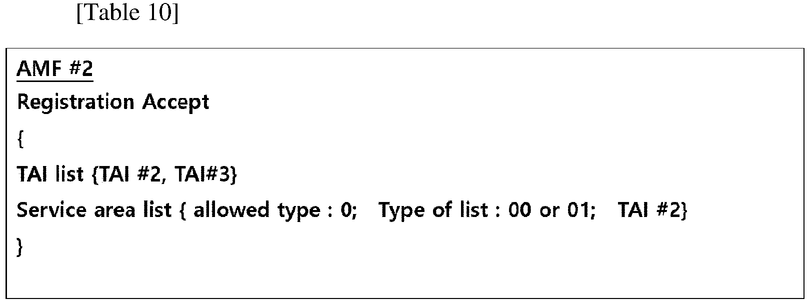

Next, the UE may move to the location A and select and camp on the cell#1 1210. The UE may receive TAI#1 and TAI#2 as TA information of the cell#1 1210 that is broadcast from the RAN. Herein, because TAI#2 is included in the TAI list of the UE, the UE may not trigger a mobility procedure. Accordingly, deadlock may occur in the above-described scenario.

That is, as the UE does not trigger a mobility registration request in a specific location, a mismatch of location information may occur between the network and the UE. In addition, deadlock between the network and the UE may occur based on what is described above. Accordingly, a method of enabling a UE to normally operate by preventing deadlock from occurring to the UE will be described below.

As an example, in case the UE detects at least one new TAI, the UE may check whether or not any one of the new TAIs is present in the TAI list of the UE. Specifically, in case one or more TACs are included in a cell that an AS layer of the UE selects and camp on, the AS layer of the UE may indicate the one or more TACs to a NAS layer of the UE. The NAS layer of the UE may identify a TAC nor present in the stored TAI list based on TACs and a registered PLMN and thus check whether or not any one of the new TAIs is present in the TAI list. Herein, in case none of the at least one new TAI is included in the TAI list present in the UE, the UE may trigger a mobility registration request. On the other hand, in case any one of the at least one new TAI is included in the TAI list of the UE, the UE may not trigger the mobility registration request, which will be described below.

As a concrete example, as described above, in case the TAI list of the UE stores TAI#1 and TAI#2 and the UE detects TAI#3, the mobility registration request may be triggered, but this is merely one example, and the present disclosure is not limited thereto. That is, in case none of the at least one new TAI is included in a tracking area list present in the UE, the UE may trigger the mobility registration request.

As another example, in case any one of the at least one TAI is included in the TAI list, the UE may check whether or not the newly detected TAI is included in an allowed service area in a service area list. Herein, if the newly detected TAI is included in the allowed service area in the service area list, the mobility registration request may not be triggered.

As an example, even in case any one of the at least one TAI is included in the TAI list, if every newly detected TA is present in a non-allowed area in the service area list, the UE may trigger the mobility registration request.

As an example, in Table 11 below, the UE may perform a registration procedure by transmitting a mobility registration request message based on what is described above but may not be limited thereto.

As an example, in case the UE is registered to a non-satellite NG RAN cell and detects entering a tracking area not included in a tracking area list of the UE based on a previous AMF of the UE, the UE may transmit the mobility request message (a) of Table 11).

As another example, in case the UE is registered to a satellite NG-RAN cell and detects entering one or more TAIs not included in the TAI list of the UE among broadcast TAIs based on a previous AMF of the UE, the UE may transmit the mobility request message (a-1) of Table 11).

As another example, in case the UE is registered to a satellite NG-RAN cell and detects entering any one of TAIs included in the TAI list of the UE based on a previous AMF of the UE but it is not an allowed area, the UE may transmit the mobility request message (a-2) of Table 11).

As another example, in case the UE is registered to a satellite NG-RAN cell and detects entering a plurality of TAIs among all TAIs, if none of the TAIs which the UE enters is included in the TAI list based on a previous AMF of the UE or the TAIs are present in the TAI list but not in an allowed area, the UE may transmit the mobility request message (a-3) of Table 11).

**[Table 11]**

| |
|---|
| Mobility and periodic registration update initiation |
| The UE in state 5GMM-REGISTERED shall initiate the registration procedure for mobility and periodic registration update by sending a REGISTRATION REQUEST message to the AMF, |
| a) when the UE is registered via non satellite NG-RAN cell and when the UE detects entering a tracking area that is not in the list of tracking areas that the UE previously registered in the AMF; |
| a-1) when the UE is registered via satellite NG-RAN cell and when the UE detects entering one or more than TAI(s) that are not in the list of tracking areas that the UE previously registered in the AMF, among broadcast TAI(s); |
| a-2) when the UE is registered via satellite NG-RAN cell and when the UE detects entering one TAI among all broadcast TAIs that is in the list of tracking areas that UE previously registered in the AMF, but that is not in Allowed Areas; |
| a-3) when the UE is registered via satellite NG-RAN cell and when the UE detects entering more than one TAI(s) among all broadcast TAIs and the all entering TAI(s) are |
| - not in the list of tracking areas that UE previously registered in the AMF; or |
| - in the list of tracking areas that UE previously registered in the AMF, but not in Allowed Areas; |

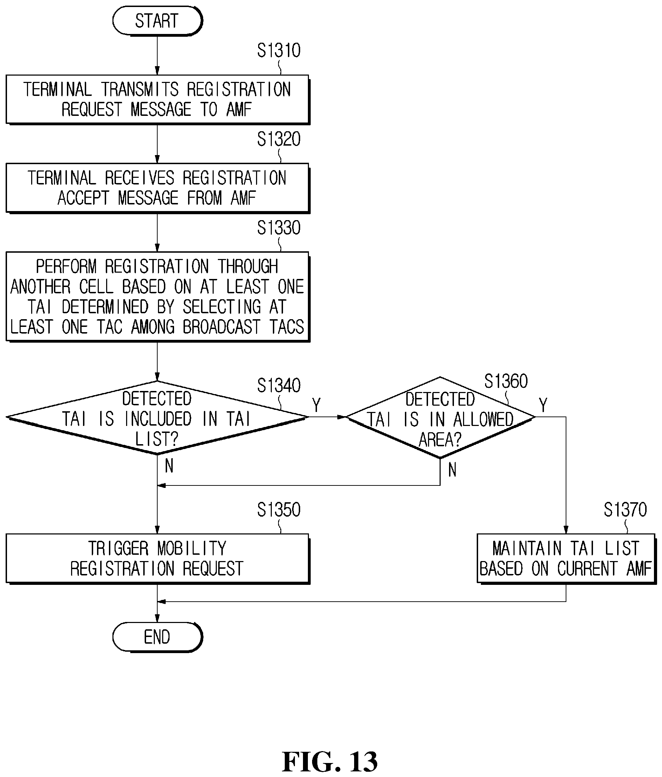

FIG. 13 is a flowchart showing an operation of a terminal applicable to the present disclosure.

Referring to FIG. 13, the terminal may transmit a mobility registration request message to an AMF in order to be registered to a network (S 1310). Next, in case the terminal is allowed to be registered to the network, the terminal may receive a registration accept message from the AMF (S1320). Herein, the registration accept message may include a TAI list based on a registration area.

Next, the terminal may perform registration through another cell based on at least one TAI that is determined by selecting at least any one TAC among broadcast TACs (S1330). As an example, based on a movement of the terminal, the terminal may obtain broadcast TACs, select a TAC and then perform registration to another cell. Herein, the terminal may determine a TAI based on the selected TAC and a PLMN, to which the terminal is registered, and thus detect the TAI. Herein, based on whether or not the detected TAI is included in a TAI list, whether or not to trigger a mobility registration request may be determined (S1340). As an example, if the detected TAI is not included in the TAI list of the terminal, the mobility registration request may be triggered (S1350). On the other hand, if the detected TAI is included in the TAI list (S1340), whether or not the detected TAI corresponds to an allowed area based on a service area may be determined (S1360). Herein, in case the detected TAI does not correspond to an allowed area, the terminal may trigger the mobility registration request (S1350). That is, the terminal may trigger mobility registration for a non-allowed area. On the other hand, in case the detected TAI corresponds to an allowed area, the terminal may maintain the TAI list based on a current AMF (S1370).

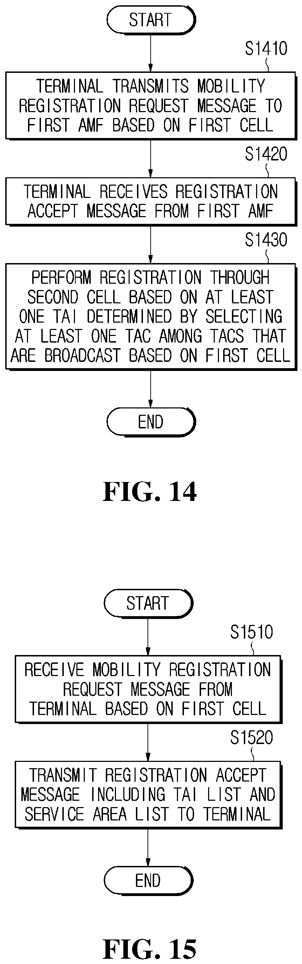

FIG. 14 is a view showing an operation of a terminal applicable to the present disclosure. Referring to FIG. 14, the terminal may transmit a mobility registration request message to a first AMF based on a first cell (S1410). Next, the terminal may receive a registration accept message from the first AMF (S1420). Herein, the registration accept message may include a TAI list and a service area list based on a registration area of the terminal, and the terminal may store the TAI list. Next, the terminal may perform registration through a second cell based on at least one TAI that is determined by selecting at least any one TAC among TACs that are broadcast based on a first cell (S1430). As an example, a TAI may be determined based on a PLMN and a TAC to which the terminal is registered, and the terminal may detect the determined TAI. Specifically, an access stratum (AS) layer of the terminal may deliver the broadcast TACs to a non-access stratum (NAS) layer of the terminal, and the NAS layer of the terminal may determine a TAI from the delivered TACs.

Herein, the terminal may determine whether or not to trigger a mobility registration request based on the TAI list and the service area list. As an example, in case the second cell is a non-satellite cell, when the terminal detects a TAI not included in the TAI list based on the first AMF, the terminal may transmit a mobility registration request message to another AMF by triggering the mobility registration request.

In addition, as an example, the second cell may be a fixed cell and correspond to a fixed one TAI. Herein, in case the second cell is a satellite cell, the second cell may be a moving cell and correspond to at least one TAI, as described above. In addition, based on at least one selected TAC, the terminal may trigger a mobility request in case at least one TAI is not included in the TAI list based on the first AMF.

In addition, based on at least one selected TAC, the terminal may determine whether or not to trigger a mobility request in case at least one TAI is not included in the TAI list based on the first AMF. Herein, if one TAI included in the TAI list corresponds to an allowed area based on the service area list, the mobility request may not be triggered, and if one TAI included in the TAI list corresponds to a non-allowed area based on the service area list, the mobility request may be triggered.

In addition, as an example, based on at least one selected TAC, in case the terminal detects a plurality of TAIs not included in the TAI list based on the first AMF, the terminal may determine whether or not to trigger a mobility request based on the plurality of TAIs. Herein, if all of the plurality of TAIs are not included in the TAI list based on the first AMF, the terminal may trigger the mobility request. In addition, all of the plurality of TAIs are included in the TAI list based on the first AMF, the terminal may determine whether or not to trigger the mobility request based on the service area list. As an example, based on the service area list, if all of the plurality of TAIs correspond to non-allowed areas, the terminal may trigger the mobility request.

FIG. 15 is a view showing an operation of an AMF applicable to the present disclosure. Referring to FIG. 15, the AMF may receive a mobility registration request message from a terminal based on a first cell (S1510). Next, the AMF may transmit a registration accept message to the terminal (S1520). Herein, the registration accept message may include a TAI list and a service area list based on a registration area of the terminal, and the terminal may store the TAI list. Next, the terminal may select at least any one TAC among TACs, which are broadcast based on the first cell, and perform registration to a second cell. Herein, the terminal may determine whether or not to trigger a mobility registration request, based on the TAI list and the service area list. As an example, in case the second cell is a non-satellite cell, when detecting a TAI not included in the TAI list based on the first AMF, the terminal may transmit a mobility registration request message to another AMF by triggering the mobility registration request.

In addition, as an example, the second cell may be a fixed cell and correspond to a fixed one TAI. Herein, in case the second cell is a satellite cell, the second cell may be a moving cell and correspond to at least one TAI, as described above. In addition, based on at least one selected TAC, the terminal may trigger a mobility request in case at least one TAI is not included in the TAI list based on the first AMF.

In addition, based on the at least one selected TAC, in case the terminal detects one TAI included in the TAI list based on the first AMF, the terminal may determine whether or not to trigger the mobility request based on the service area list. Herein, if the one TAI included in the TAI list corresponds to an allowed area based on the service area list, the mobility request may not be triggered, and if the one TAI included in the TAI list corresponds to a non-allowed area based on the service area list, the mobility request may be triggered.

In addition, as an example, based on at least one selected TAC, in case the terminal detects a plurality of TAIs not included in the TAI list based on the first AMF, the terminal may determine whether or not to trigger a mobility request based on the plurality of TAIs. Herein, if all of the plurality of TAIs are not included in the TAI list based on the first AMF, the terminal may trigger the mobility request. In addition, all of the plurality of TAIs are included in the TAI list based on the first AMF, the terminal may determine whether or not to trigger the mobility request based on the service area list. As an example, based on the service area list, if all of the plurality of TAIs correspond to non-allowed areas, the terminal may trigger the mobility request.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating a terminal in a wireless communication system, the method comprising:
transmitting, by the terminal, a mobility registration request message to a first access and mobility management function (AMF) based on a first cell;
receiving, by the terminal, a registration accept message from the first AMF, wherein the registration accept message includes a tracking area identity (TAI) list and a service area list based on a registration area of the terminal; and
determining, by the terminal, whether or not to trigger a mobility registration request based on the TAI list and the service area list, based on the terminal being registered through a second cell based on at least one tracking area identity (TAI) that is determined by selecting at least one tracking area code (TAC) among TACs that are broadcast based on the first cell.

2. The method of claim 1, wherein a TAI includes of a public land mobile network (PLMN) ID and a TAC, and
wherein whether or not the TAI is included in a TAI list is determined based on the PLMN ID and the TAC.

3. The method of claim 2, wherein an access stratum (AS) layer of the terminal delivers the broadcast TACs to a non-access stratum (NAS) layer of the terminal, and the NAS layer of the terminal determines a TAI from the delivered TACs.

4. The method of claim 2, wherein, based on the second cell being a non-satellite cell, in case the terminal detects a TAI not included in the TAI list based on the first AMF, the terminal triggers the mobility registration request.

5. The method of claim 4, wherein the second cell is a fixed cell and corresponds to one fixed TAI.

6. The method of claim 2, wherein, based on the second cell being a satellite cell, the second cell is a moving cell and corresponds to at least one TAI.

7. The method of claim 6, wherein the terminal triggers the mobility request based on the at least one TAI being not included in the TAI list based on the first AMF.

8. The method of claim 6, wherein, based on the terminal detecting one TAI included in the TAI list based on the first AMF among the at least one TAI, the terminal determines whether or not to trigger a mobility request based on the service area list.

9. The method of claim 8, wherein based on the one TAI included in the TAI list corresponds to an accept area based on the service area list, the mobility request is not triggered, and
wherein based on the one TAI included in the TAI list corresponds to a non-accept area based on the service area list, the mobility request is triggered.

10. The method of claim 6, wherein, based on the terminal detecting a plurality of TAIs not included in the TAI list based on the first AMF based on the at least one selected TAC, whether or not to trigger the mobility request is determined based on the plurality of TAIs.

11. The method of claim 10, wherein, based on all of the plurality of TAIs being not included in the TAI list based on the first AMF, the mobility request is triggered.

12. The method of claim 10, wherein, based on the plurality of TAIs being all included in the TAI list based on the first AMF, whether or not to trigger the mobility request is determined based on the service area list.

13. The method of claim 12, wherein, based on the plurality of TAIs correspond to all non-accept areas based on the service area list, the mobility request is triggered.

14. The method of claim 1, wherein based on the mobility registration request being triggered, a registration request message is transmitted to a second AMF based on the second cell, and
wherein based on a registration accept message being received from the second AMF, the TAI list is updated.

15. A terminal operating in a wireless communication system, the terminal comprising:
at least one transceiver;
at least one processor; and
at least one memory functionally coupled with the at least one processor and storing instructions that instruct, when executed, the at least one processor to perform a specific operation,
wherein the specific operation is configured to:
control the at least one transceiver to transmit a mobility registration request message to a first access and mobility management function (AMF),
control the at least one transceiver to receive a registration accept message from the first AMF, wherein the registration accept message includes a tracking area identity (TAI) list and a service area list based on a registration area of the terminal, and
determine whether or not to trigger a mobility registration request based on the TAI list and the service area list, based on the terminal being registered through a second cell based on at least one TAI that is determined by selecting at least one tracking area code (TAC) among TACs that are broadcast based on the first cell.

16. A method for operating an access and mobility management function (AMF) in a wireless communication system, the method comprising:
receiving a mobility registration request message from a terminal based on a first cell; and
transmitting a registration accept message to the terminal,
wherein the registration accept message may include a tracking area identity (TAI) list and a service area list based on a registration area of the terminal, and
wherein, based on the terminal being registered through a second cell based on at least one TAI that is determined by selecting at least one tracking area code (TAC) among TACs that are broadcast based on the first cell, whether or not to trigger a mobility registration request is determined based on the TAI list and the service area list.

17. An access and mobility management function (AMF) operating in a wireless communication system, the AMF comprising:
at least one transceiver;
at least one processor; and
at least one memory functionally coupled with the at least one processor and storing instructions that instruct, when executed, the at least one processor to perform a specific operation,
wherein the specific operation is configured to:
control the at least one transceiver to receive a mobility registration request message from a terminal based on a first cell, and
control the at least one transceiver to transmit a registration accept message to the terminal,
wherein the registration accept message includes a tracking area identity (TAI) list and a service area list based on a registration area of the terminal, and
wherein, based on the terminal being registered through a second cell based on at least one TAI that is determined by selecting at least one tracking area code (TAC) among TACs that are broadcast based on the first cell, whether or not to trigger a mobility registration request is determined based on the TAI list and the service area list.

18. A device comprising:
at least one memory; and
at least one processor functionally coupled with the at least one memory,
wherein the at least one processor controls the device to:
transmit a mobility registration request message to a first access and mobility management function (AMF) based on a first cell,
receive a registration accept message from the first AMF, wherein the registration accept message includes a tracking area identity (TAI) list and a service area list based on a registration area of the terminal, and
determine whether or not to trigger a mobility registration request based on the TAI list and the service area list, based on the terminal being registered through a second cell based on at least one TAI that is determined by selecting at least one tracking area code (TAC) among TACs that are broadcast based on the first cell.

19. A non-transitory computer-readable medium storing at least one instruction, the non-transitory computer-readable medium comprising the at least one instruction that is executable by a processor,
wherein the at least one instruction controls a device to:
transmit a mobility registration request message to a first access and mobility management function (AMF) based on a first cell,
receive a registration accept message from the first AMF, wherein the registration accept message includes a tracking area identity (TAI) list and a service area list based on a registration area of the terminal, and
determine whether or not to trigger a mobility registration request based on the TAI list and the service area list, based on the terminal being registered through a second cell based on at least one TAI that is determined by selecting at least one tracking area code (TAC) among TACs that are broadcast based on the first cell.
